# EUROPEAN PATENT APPLICATION

(11) **EP 3 082 336 A1**
(43) Date of publication of application: **19.10.2016**
(21) Application number: 14876462.4
(22) Date of filing: 02.12.2014
(51) Int. Cl.: H04N 7/14

(54) **METHOD AND DEVICE FOR ADAPTING TO SCREEN ORIENTATION SWITCHING DURING VIDEO CALL**

(30) Priority: 31.12.2013 CN 201310753502
(71) Applicant: Huawei Technologies Co., Ltd., Longgang District Shenzhen, Guangdong 518129 (CN)
(72) Inventor: LI, Deshou, Shenzhen Guangdong 518129 (CN); WANG, Mingwu, Shenzhen Guangdong 518129 (CN); RONG, Duojun, Shenzhen Guangdong 518129 (CN); LI, Yulin, Shenzhen Guangdong 518129 (CN)
(74) Representative: Pfenning, Meinig & Partner mbB
(86) International application number: PCT/CN2014/092795
(87) International publication number: WO 2015/101126

(57) **Abstract**

Embodiments of the present invention provide a method for adapting to screen orientation switching during a video call and an apparatus. The method includes: During a video call between a first terminal and a second terminal, detecting, by the first terminal, screen orientation switching of the first terminal; after it is detected that the screen orientation switching of the first terminal occurs, sending a switched screen orientation to the second terminal; and receiving a video stream that is sent by the second terminal according to a video requirement corresponding to the screen orientation. According to the embodiments of the present invention, video quality may adapt to screen orientation switching of a terminal.

## Description

This application claims priority to Chinese Patent Application No. 201310753502.7, filed with the Chinese Patent Office on December 31, 2013, and entitled with "METHOD AND APPARATUS FOR ADAPTING TO SCREEN ORIENTATION SWITCHING DURING VIDEO CALL ", which is incorporated herein by reference in its entirety.

### TECHNICAL FIELD

The present invention relates to the field of communications technologies, and in particular, to a method for adapting to screen orientation switching during a video call and an apparatus.

### BACKGROUND

With the development of network and media technologies, video call applications and the like are increasingly mature, especially video call applications, such as Skype and Facetime, on a mobile terminal, such as a mobile phone and a tablet computer, have already had a vast majority of user groups on the mobile Internet.

In a process of a video call, screen orientation switching of a terminal, such as a mobile phone and a tablet computer, may occur with a change of a hand holding gesture of a user. The screen orientation switching refers to that a screen orientation of a terminal is switched between a landscape orientation and a portrait orientation, for example, from the landscape orientation to the portrait orientation or from the portrait orientation to the landscape orientation. At present, in most video call applications, when screen orientation switching of a terminal is performed, switching between a transverse orientation and a longitudinal orientation of a video imageimagemay also be performed. Therefore, switching between a landscape orientation and a portrait orientation on a terminal affects video quality of a video call. For example, when a screen orientation of the terminal is switched from the landscape orientation to the portrait orientation, a video image is stretched in a longitudinal orientation, and consequently, a video effect is damaged and quality of the video call is decreased.

### SUMMARY

Embodiments of the present invention provide a method for adapting to screen orientation switching during a video call and an apparatus, so as to resolve a problem that quality of a video call is damaged resulting from screen orientation switching of a terminal.

According to a first aspect, a terminal is provided, including:
a detecting unit, configured to: detect screen orientation switching of the terminal in a process of a video call, and after it is detected that the screen orientation switching occurs, provide a detecting result that the screen orientation switching occurs for a negotiating unit;
the negotiating unit, configured to: after receiving the detecting result provided by the detecting unit, send a switched screen orientation to a peer terminal on the video call; and
a video unit, configured to receive a video stream that is sent by the peer terminal according to a video requirement corresponding to the screen orientation.

In a first possible implementation manner of the first aspect, before providing the detected result for the negotiating unit, the detecting unit is further configured to determine that the detected screen orientation switching is valid screen orientation switching, where the valid screen orientation switching is screen orientation switching that does not occur again within a preset time after the screen orientation switching occurs.

With reference to the first aspect or the first possible implementation manner of the first aspect, in a second possible implementation manner, the video requirement corresponding to the screen orientation specifically includes a resolution corresponding to the screen orientation, where
the negotiating unit is specifically configured to send, to the peer terminal, a negotiation request that carries the screen orientation, where the negotiation request is used to request the peer terminal to adjust a collection resolution of the peer terminal according to the screen orientation; and
the video unit is specifically configured to receive a video stream that is collected and encoded by the peer terminal after the peer terminal adjusts the collection resolution according to the resolution corresponding to the screen orientation.

With reference to the second possible implementation manner of the first aspect, in a third possible implementation manner, the negotiating unit is further configured to send a screen resolution to the peer terminal, where the screen resolution is used to determine the resolution corresponding to the screen orientation; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

With reference to the first aspect or any one of the first to third possible implementation manners of the first aspect, in a fourth possible implementation manner, the negotiating unit is further configured to: during establishing the video call, acquire an initial screen orientation, and send the initial screen orientation to the peer terminal; and
the video unit is further configured to receive a video stream that is provided by the peer terminal before the peer terminal receives the switched screen orientation and according to a video requirement corresponding to the initial screen orientation.

According to a second aspect, a terminal is provided, including: a receiving unit, configured to receive, during a video call, a switched screen orientation that is sent by a peer terminal on the video call after screen orientation switching occurs;
a determining unit, configured to determine a video requirement corresponding to the screen orientation received by the receiving unit; and
a video unit, configured to provide a video stream for the peer terminal according to the video requirement corresponding to the screen orientation that is determined by the determining unit.

In a first possible implementation manner of the second aspect, the video requirement corresponding to the screen orientation specifically includes a resolution corresponding to the screen orientation, and
the video unit specifically includes an adjusting subunit, a collection component, and a video subunit, where
the adjusting subunit is configured to adjust a collection resolution of the collection component according to the resolution corresponding to the screen orientation;
the collection component is configured to collect a video image according to a collection resolution that is obtained after the adjusting subunit performs the adjustment; and
the video subunit is configured to: encode the video image collected by the collection component to form a video stream, and send the video stream to the peer terminal.

With reference to the first possible implementation manner of the second aspect, in a second possible implementation manner, the adjusting subunit specifically includes:
an acquiring module, configured to acquire collection resolutions supported by the collection component;
a selecting module, configured to select, from the collection resolutions acquired by the acquiring module, a collection resolution that is the closest to the resolution corresponding to the screen orientation; and
an adjusting module, configured to adjust the collection resolution of the collection component to the collection resolution selected by the selecting module.

With reference to the second possible implementation manner of the second aspect, in a third possible implementation manner, the selecting module specifically includes:
a selecting submodule, configured to separately select, from the collection resolutions acquired by the acquiring module, a collection resolution with the number of transverse pixels closest to a first pixel number and a collection resolution with the number of longitudinal pixels closest to a second pixel number, where the first pixel number is the number of transverse pixels that is corresponding to the resolution corresponding to the screen orientation, and the second pixel number is the number of longitudinal pixels that is corresponding to the resolution corresponding to the screen orientation; and
a comparing submodule, configured to: compare a ratio between the number of transverse pixels and the number of longitudinal pixels that are corresponding to the collection resolutions selected by the selecting submodule with a ratio between the number of transverse pixels and the number of longitudinal pixels that are corresponding to the resolution corresponding to the screen orientation, and use a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

With reference to the third possible implementation manner of the second aspect, in a fourth possible implementation manner, the selecting submodule is specifically configured to select, from collection resolutions with the number of transverse pixels greater than the first pixel number and the number of longitudinal pixels greater than the second pixel number, a collection resolution with the number of transverse pixels closest to the first pixel number and a collection resolution with the number of longitudinal pixels closest to the second pixel number.

With reference to the fourth possible implementation manner of the second aspect, in a fifth possible implementation manner, the video subunit specifically includes:
a cropping module, configured to crop the video image collected by the collection component to a video image whose resolution is completely consistent with the resolution corresponding to the screen orientation; and
an encoding module, configured to: encode the video image obtained by cropping by the cropping module to form a video stream, and send the video stream to the peer terminal.

With reference to the second aspect or any one of the first to fifth possible implementation manners of the second aspect, in a sixth possible implementation manner, the terminal further includes:
a switching unit, configured to switch an orientation of a video image to an orientation that is consistent with the screen orientation of the peer terminal, where the video image is provided for the peer terminal and locally displayed.

With reference to any one of the first to sixth possible implementation manners of the second aspect, in a seventh possible implementation manner, the receiving unit is further configured to receive a screen resolution of the peer terminal; and
the determining unit is specifically configured to determine, according to the screen resolution, the resolution corresponding to the screen orientation; when the screen orientation is a landscape orientation, the number of transverse pixels that is corresponding to the resolution corresponding to the screen orientation is equal tothe number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

With reference to the second aspect or any one of the first to seventh possible implementation manners of the second aspect, in an eighth possible implementation manner, the receiving unit is further configured to receive an initial screen orientation of the peer terminal during establishing the video call; and
the video unit is further configured to: before the switched screen orientation is received, provide a video stream for the peer terminal according to a video requirement corresponding to the initial screen orientation.

According to a third aspect, a method for adapting to screen orientation switching during a video call is provided, where the method includes:
During a video call between a first terminal and a second terminal, detecting, by the first terminal, screen orientation switching of the first terminal;
after it is detected that the screen orientation switching of the first terminal occurs, sending, by the first terminal, a switched screen orientation to the second terminal; and
receiving, by the first terminal, a video stream that is sent by the second terminal according to a video requirement corresponding to the screen orientation.

In a first possible implementation manner of the third aspect, before the switched screen orientation is sent to the second terminal, the method further includes determining that the detected screen orientation switching is valid screen orientation switching, where the valid screen orientation switching is screen orientation switching that does not occur again within a preset time after the screen orientation switching occurs.

With reference to the third aspect or the first possible implementation manner of the third aspect, in a second possible implementation manner, the video requirement corresponding to the screen orientation specifically includes a resolution corresponding to the screen orientation, where
the sending a switched screen orientation to the second terminal specifically includes sending, to the second terminal, a negotiation request that carries the screen orientation, where the negotiation request is used to request the second terminal to adjust a collection resolution of the second terminal according to the screen orientation; and
the receiving a video stream that is sent by the second terminal according to a video requirement corresponding to the screen orientation specifically includes receiving a video stream that is collected and encoded by the second terminal after the second terminal adjusts the collection resolution according to the resolution corresponding to the screen orientation.

With reference to the second possible implementation manner of the third aspect, in a third possible implementation manner, the method further includes:
sending, by the first terminal, a screen resolution of the first terminal to the second terminal, where the screen resolution is used to determine the resolution corresponding to the screen orientation; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

With reference to the third aspect or any one of the first to third possible implementation manners of the third aspect, in a fourth possible implementation manner, the method further includes:
During establishing the video call, acquiring, by the first terminal, an initial screen orientation, and sending the initial screen orientation to the second terminal; and
receiving, by the first terminal, a video stream that is provided by the second terminal before the second terminal receives the switched screen orientation and according to a video requirement corresponding to the initial screen orientation.

According to a fourth aspect, a method for adapting to screen orientation switching during a video call is provided, where the method includes:
During a video call between a first terminal and a second terminal, receiving, by the second terminal, a switched screen orientation that is sent by the first terminal after screen orientation switching occurs;
determining, by the second terminal, a video requirement corresponding to the screen orientation; and
providing, by the second terminal, a video stream for the first terminal according to the video requirement corresponding to the screen orientation.

In a first possible implementation manner of the fourth aspect, the video requirement corresponding to the screen orientation specifically includes a resolution corresponding to the screen orientation; and
the providing, by the second terminal, a video stream for the first terminal according to the video requirement corresponding to the screen orientation specifically includes:
adjusting, by the second terminal, a collection resolution of the second terminal according to the resolution corresponding to the screen orientation; and
collecting a video image according to an adjusted collection resolution, encoding the collected video image to form a video stream, and sending the video stream to the first terminal.

With reference to the first possible implementation manner of the fourth aspect, in a second possible implementation manner, the adjusting, by the second terminal, a collection resolution of the second terminal according to the resolution corresponding to the screen orientation specifically includes:
acquiring, by the second terminal, collection resolutions supported by the second terminal;
selecting, from the acquired collection resolutions, a collection resolution that is the closest to the resolution corresponding to the screen orientation; and
adjusting the collection resolution of the second terminal to the selected collection resolution.

With reference to the second possible implementation manner of the fourth aspect, in a third possible implementation manner, the selecting, from the acquired collection resolutions, a collection resolution that is the closest to the resolution corresponding to the screen orientation specifically includes:
separately selecting, from the acquired collection resolutions, a collection resolution with the number of transverse pixels closest to a first pixel number and a collection resolution with the number of longitudinal pixels closest to a second pixel number, where the first pixel number is the number of transverse pixels that is corresponding to the resolution corresponding to the screen orientation, and the second pixel number is the number of longitudinal pixels that is corresponding to the resolution corresponding to the screen orientation; and
comparing a ratio between the number of transverse pixels and the number of longitudinal pixels that are corresponding to the selected collection resolutions with a ratio between the number of transverse pixels and the number of longitudinal pixels that are corresponding to the resolution corresponding to the screen orientation, and using a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

With reference to the third possible implementation manner of the fourth aspect, in a fourth possible implementation manner, the separately selecting, from the acquired collection resolutions, a collection resolution with the number of transverse pixels closest to a first pixel number and a collection resolution with the number of longitudinal pixels closest to a second pixel number specifically includes:
selecting, from collection resolutions with the number of transverse pixels greater than the first pixel number and the number of longitudinal pixels greater than the second pixel number, a collection resolution with the number of transverse pixels closest to the first pixel number and a collection resolution with the number of longitudinal pixels closest to the second pixel number.

With reference to the fourth possible implementation manner of the fourth aspect, in a fifth possible implementation manner, the encoding the collected video image to form a video stream, and sending the video stream to the first terminal specifically includes:
cropping the collected video image to a video image whose resolution is completely matched with the resolution corresponding to the screen orientation; and
encoding the video image obtained by cropping to form a video stream, and sending the video stream to the first terminal.

With reference to the fourth aspect or any one of the first to fifth possible implementation manners of the fourth aspect, in a sixth possible implementation manner, the method further includes:
switching, by the second terminal, an orientation of a video image to an orientation that is consistent with the screen orientation of the peer terminal, where the video image is provided for the peer terminal and locally displayed.

With reference to any one of the first to sixth possible implementation manners of the fourth aspect, in a seventh possible implementation manner, the method further includes receiving, by the second terminal, a screen resolution of the first terminal, and
the determining, by the second terminal, a video requirement corresponding to the screen orientation specifically includes: determining, by the second terminal according to the screen resolution, the resolution corresponding to the screen orientation; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

With reference to the fourth aspect or any one of the first to seventh possible implementation manners of the fourth aspect, in an eighth possible implementation manner, the method further includes:
During establishing the video call, receiving, by the second terminal, an initial screen orientation of the first terminal; and
before receiving the switched screen orientation, providing, by the second terminal, a video stream for the first terminal according to a video requirement corresponding to the initial screen orientation.

In the foregoing embodiments, in a process of a video call, screen orientation switching of a terminal is detected, and a switched screen orientation is sent to a peer terminal, so that the peer terminal may provide a video stream according to a video requirement corresponding to the screen orientation, thereby avoiding a problem that an effect is damaged, resulting from the screen orientation switching, when a video is displayed, and improving quality of the video call.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an architecture diagram of a system for implementing a video call service according to an embodiment of the present invention;
FIG. 2 is a schematic structural diagram of a terminal according to an embodiment of the present invention;
FIG. 3 is a schematic structural diagram of a terminal according to another embodiment of the present invention;
FIG. 4 is a schematic structural diagram of a terminal according to another embodiment of the present invention;
FIG. 5 is a flowchart of a method for adapting to screen orientation switching during a video call according to an embodiment of the present invention;
FIG. 6 is a flowchart of a method for adapting to screen orientation switching during a video call according to another embodiment of the present invention;
FIG. 7 is a flowchart of a method for adapting to switching between landscape and portrait orientations during a video call according to another embodiment of the present invention;
FIG. 8 is a schematic structural diagram of hardware of a terminal according to an embodiment of the present invention; and
FIG. 9 is a schematic structural diagram of hardware of a terminal according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

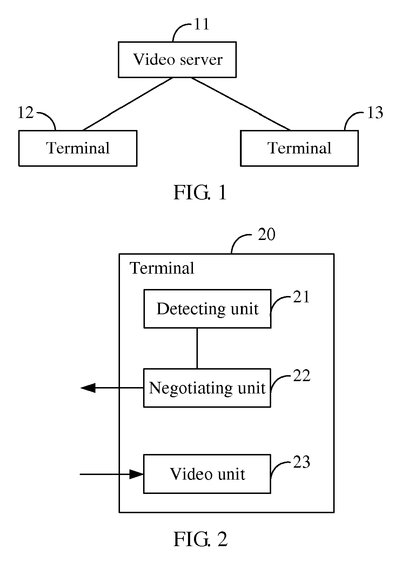

FIG. 1 is an architecture diagram of a system for implementing a video call service according to an embodiment of the present invention. As shown in FIG. 1, the system includes a video server 11, a terminal 12, and a terminal 13. The terminal 12 and the terminal 13 are terminals that have a function of video call. The video server 11 is support for functions, such as user management, service management, call routing, call negotiation, and call connection, in a calling service. The terminal 12 and the terminal 13 perform interaction via video server 11. Interaction between the terminals and the video server may be implemented based on the Session Initiation Protocol (SIP).

A solution provided in this embodiment of the present invention may be applied to the terminal 12 and the terminal 13. When screen orientation switching of one party of the terminal 12 and the terminal 13 that are on a video call, for example, the terminal 12, occurs, the terminal 12 notifies the terminal 13 of a switched screen orientation. The terminal 13 adjusts, according to the screen orientation notified by the terminal 12, a parameter that affects quality of a video image. The parameter that affects the quality of the video image may be specifically a parameter that is affected by a screen orientation when a video is played, such as a resolution.

It should be noted that the terminal 12 and the terminal 13 in FIG. 1 are merely used for exemplary description. In an actual application, there may be multiple terminals on a video call, and the solution provided in this embodiment of the present invention may also be applied when screen orientation switching of a terminal on a multiparty video call occurs. Specifically, during the multiparty video call, a terminal on which screen orientation switching occurs may separately send a switched screen orientation to another terminal that participates in the video call, and each terminal that receives the screen orientation may provide, according to a video requirement corresponding to the screen orientation, a video stream for the terminal on which the screen orientation switching occurs.

With reference to the accompany drawings, the following describes in detail the terminal on which the screen orientation switching occurs and a specific structure of a peer terminal thereof separately.

FIG. 2 is a schematic structural diagram of a terminal 20 according to an embodiment of the present invention. The terminal 20 in this embodiment is a terminal on which screen orientation switching occurs. As shown in FIG. 2, the terminal 20 includes a detecting unit 21, a negotiating unit 22, and a video unit 23.

The detecting unit 21 is configured to: detect screen orientation switching in a video call, and after it is detected that the screen orientation switching occurs, provide a detected result that the screen orientation switching occurs for the negotiating unit 22.

The negotiating unit 22 is configured to: after receiving the detected result provided by the detecting unit 21, send a switched screen orientation to a peer terminal on the video call.

The video unit 23 is configured to receive a video stream that is sent by the peer terminal according to a video requirement corresponding to the screen orientation.

In the foregoing embodiment, functions of detecting screen orientation switching during a video call and providing a switched screen orientation for a peer terminal are implemented on a terminal, so that the peer terminal may provide a video stream according to a video requirement corresponding to the screen orientation, thereby avoiding a problem that an effect is damaged, resulting from the screen orientation switching, when a video is displayed, and improving quality of the video call.

To avoid that a misoperation on the terminal causes that a screen orientation is frequently sent to the peer terminal, before providing the detected result to the negotiating unit 22, the detecting unit 21 shown in the embodiment of FIG. 1 is further configured to determine that the monitored screen orientation switching is valid screen orientation switching. In a specific example, the valid screen orientation switching is screen orientation switching that does not occur again within a preset time after the screen orientation switching occurs.

The foregoing preset time may be set according to an actual requirement, and the switched screen orientation may be delayed being sent to the peer terminal according to the preset time.

In the foregoing embodiment, a delay mechanism is used, that is, a switched screen orientation is sent to a peer terminal provided that screen orientation switching does not occur again within a preset time. In this way, it may be avoided that a screen orientation is frequently sent to the peer terminal and that the peer terminal frequently adjusts a related parameter of a video image, thereby reducing network resources and reducing impact on performance of the peer terminal.

In this embodiment of the present invention, a screen orientation is sent to a peer terminal, so that a peer terminal can adjust a related parameter that is affected by the screen orientation when a video is played, an adjusted video meets a video requirement corresponding to the screen orientation, and video quality may adapt to screen orientation switching of a terminal.

In the following, that a related parameter that is affected by a screen orientation is a resolution is used as an example to describe in detail the solution of this embodiment of the present invention. In this embodiment, the video requirement corresponding to the screen orientation specifically includes a resolution corresponding to the screen orientation.

The negotiating unit 22 is specifically configured to send, to the peer terminal, a negotiation request that carries the screen orientation, where the negotiation request is used to request the peer terminal to adjust a collection resolution of the peer terminal according to the screen orientation. In a specific example, adjusting, by the peer terminal, a collection resolution of a collection component (such as a camera) of the peer terminal according to the screen orientation may be included.

The video unit 23 is specifically configured to receive a video stream that is collected and encoded by the peer terminal after the peer terminal adjusts the collection resolution according to the resolution corresponding to the screen orientation.

In specific implementation, the negotiating unit 22 may send, to the peer terminal, a negotiation request based on the SIP protocol. For example, a re-INVITE message in the SIP protocol may be extended to serve as the negotiation request in this embodiment of the present invention, and the screen orientation is carried in an extension part. As shown in Table 1, Table 1 is the extension part of the re-INVITE message.

**Table 1**

| Fields | Field definitions |
|---|---|
| a=fmtp:<format> | Self-define row a. |
| x-orientation=<orientation> | x-orientation describes a screen orientation of a terminal, where 1 represents a landscape orientation and 2 represents a portrait orientation. |
| | For example: |
| | a=fmtp:106 x-orientation=1 |

In the foregoing embodiment, a terminal 20 sends a negotiation request to a peer terminal, to request the peer terminal to adjust a collection resolution according to a screen orientation that is carried in the negotiation request, so that a video image collected by the peer terminal can meet a requirement for a switched screen orientation both in a transverse orientation and in a longitudinal orientation, thereby avoiding performing processing such as stretching on the video image, and improving quality of a video call.

It should be noted that only adjusting the collection resolution is used as an example for description in the foregoing embodiment. When the video requirement corresponding to the screen orientation is a resolution, if a current collection resolution, both in the transverse orientation and in the longitudinal orientation, is greater than the resolution corresponding to the screen orientation, the collection resolution may also not be adjusted, but the video image is adjusted by a means, such as cropping, so that the video image meets the requirement for the switched screen orientation. Certainly, the video requirement corresponding to the screen orientation is not only a requirement for a resolution, and may also be another factor that affects image playback when the screen orientation is being switched. For specific implementation, reference may be made to similar implementation of the foregoing embodiment in which the collection resolution is adjusted, and details are not provided herein again.

In the foregoing embodiment, the resolution corresponding to the screen orientation may be determined according to a screen resolution of a terminal. When the screen orientation is a landscape orientation, the number of transverse pixels that is corresponding to the resolution corresponding to the screen orientation is equal to the number of length pixels that is corresponding to the screen resolution and the number of longitudinal pixels of the resolution corresponding to the screen orientation is equal to the number of width pixels that is corresponding to the screen resolution. When the screen orientation is a portrait orientation, the number of transverse pixels that is corresponding to the resolution corresponding to the screen orientation is equal to the number of width pixels that is corresponding to the screen resolution and the number of longitudinal pixels of the resolution corresponding to the screen orientation is equal to the number of length pixels that is corresponding to the screen resolution. In this field, a resolution is generally represented by using the number of transverse pixels and the number of longitudinal pixels. For example, the resolution may be represented by M (the number of transverse pixels) x N (the number of longitudinal pixels), that is, the first parameter is the number of pixels in a transverse orientation, and the second parameter is the number of pixels in a longitudinal orientation. However, a screen resolution is represented by a length and a width of a screen (the length and the width are represented by the numbers of pixels), and is unrelated to an orientation. For example, assuming that the number of length pixels that is corresponding to a screen resolution of a terminal is 1280, and a quantity of width pixels is 720, when a screen is in a landscape orientation, a transverse side is a length side of the screen, and a longitudinal side is a width side of the screen; therefore, a resolution corresponding to the landscape orientation is 1280 x 720; and when a screen is in a portrait orientation, a transverse side is a width side of the screen, and a longitudinal side is a length side of the screen; therefore, a resolution corresponding to the portrait orientation is 720 x 1280.

The peer terminal may acquire, in different manners, the screen resolution of the terminal on which screen orientation switching occurs. For example, the peer terminal may pre-save screen resolutions of terminals of different types. In a process of establishing a video call, the terminal 20 may provide a terminal type of the terminal 20 for the peer terminal according to an existing negotiation mechanism, and the peer terminal may determine, according to the terminal type, the screen resolution of the terminal on which screen orientation switching occurs. In another embodiment, the terminal 20 may also send the screen resolution of the terminal 20 to the peer terminal. It should be noted that, the terminal 20 may send the screen resolution to the peer terminal in a negotiation process during establishing a video call, or may send the screen resolution and a screen orientation together to the peer terminal after the screen orientation switching occurs. As shown in Table 2, Table 2 is an extension part of a re-INVITE message that is used for sending the screen resolution and the screen orientation together.

**Table 2**

| Fields | Field definitions |
|---|---|
| a=fmtp:<format> | Self-define row a, and describe a length and a width of a screen, where a unit is the number of pixels. |
| x-dimension-length=<terminal screen width pixels>; x-dimension-width=<terminal screen height pixels>; | |
| | Parameter x-dimension-length identifies the number of pixels in length of a terminal screen, and parameter x-dimension-width identifies the number of pixels in width of the terminal screen. |
| | For example: |
| | a=fmtp:106x-dimension-length=600; |
| | x-dimension-width=480; |
| a=fmtp:<format> | Self-define row a. |
| x-orientation=<orientation> | x-orientation describes a screen orientation of a terminal, where 1 represents a landscape orientation and 2 represents a portrait orientation. |
| | For example: |
| | a=fmtp:106 x-orientation=1 |

The peer terminal may determine the resolution corresponding to the screen orientation with reference to the received screen resolution and screen orientation.

It should be noted that, in the prior art, in during establishing a video call, the terminal 20 may perform session negotiation with the peer terminal, and during negotiation, the terminal determines a required resolution and directly sends the required resolution to the peer terminal; therefore, before it is detected that screen orientation switching occurs, the video call between the terminal 20 and the peer terminal may be performed according to the prior art, and the present invention only needs to resolve a problem resulting from the screen orientation switching during the video call. Therefore, processing of establishing a video call is not involved in the foregoing embodiment. While in another embodiment, the solution provided in this embodiment of the present invention may also be applied in the process of establishing a video call.

When the solution provided in this embodiment of the present invention is used in a process of establishing a video call, the negotiating unit 22 may be further configured to: during establishing the video call, acquire an initial screen orientation, and send the initial screen orientation to the peer terminal.

Correspondingly, the video unit 23 may be further configured to receive a video stream that is provided by the peer terminal before the peer terminal receives the switched screen orientation and according to a video requirement corresponding to the initial screen orientation.

It should be noted that, the embodiment shown in FIG. 2 is described from a perspective of a terminal on which screen orientation switching occurs, and therefore, the peer terminal in the embodiment shown in FIG. 2 refers to a terminal that sends a video stream to the terminal 20 shown in FIG. 2.

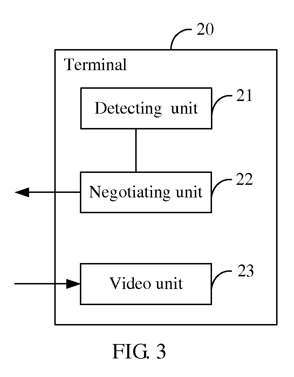

FIG. 3 is a schematic structural diagram of a terminal 30 according to an embodiment of the present invention. The terminal in this embodiment is a peer terminal of a terminal on which screen orientation switching occurs. As shown in FIG. 3, the terminal 30 includes a receiving unit 31, a determining unit 32, and a video unit 33.

The receiving unit 31 is configured to: during a video call, receive a switched screen orientation that is sent by the peer terminal on the video call after screen orientation switching occurs.

The determining unit 32 is configured to determine a video requirement corresponding to the screen orientation received by the receiving unit 31.

The video unit 33 is configured to provide a video stream for the peer terminal according to the video requirement corresponding to the screen orientation that is determined by the determining unit 32.

In the foregoing embodiment, functions of receiving a screen orientation and providing a video stream according to a video requirement corresponding to the screen orientation are added to a terminal, so that the provided video stream can dynamically adapt to screen orientation switching of a peer terminal, thereby avoiding a problem that an effect is damaged, resulting from the screen orientation switching, when the peer device displays a video, and improving quality of a video call.

It should be noted that, the embodiment shown in FIG. 3 is described from a perspective of a terminal that sends a video stream to the terminal shown in FIG. 2, and therefore, the peer terminal in the embodiment shown in FIG. 3 refers to the terminal, shown in FIG. 2, on which screen orientation switching occurs.

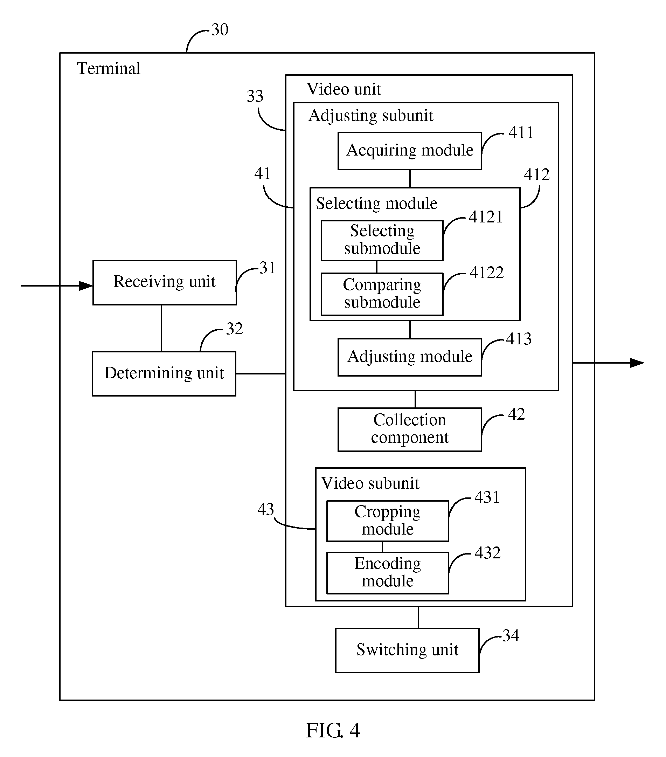

In the following, that a related parameter that is affected by a screen orientation is a resolution is used as an example to describe in detail the solution of this embodiment of the present invention. As shown in FIG. 4, FIG. 4 is a schematic structural diagram of a terminal 30 according to another embodiment of the present invention. In this embodiment, a video requirement corresponding to a screen orientation specifically includes a resolution corresponding to the screen orientation. The video unit 33 specifically includes an adjusting subunit 41, a collection component 42, and a video subunit 43.

The adjusting subunit 41 is configured to adjust a collection resolution of the collection component 42 according to the resolution corresponding to the screen orientation.

The collection component 42 is configured to collect a video image according to a collection resolution that is obtained after the adjusting subunit 41 performs the adjustment.

The video subunit 43 is configured to: encode the video image collected by the collection component 42 to form a video stream, and send the video stream to the peer terminal.

In this embodiment of the present invention, the collection component 42 may be a component, such as a camera, having a function of capturing a video image.

In specific implementation, the adjusting subunit 41 may specifically include:
an acquiring module 411, configured to acquire collection resolutions supported by the collection component 42;
a selecting module 412, configured to select, from the collection resolutions acquired by the acquiring module, a collection resolution that is the closest to the resolution corresponding to the screen orientation; and
an adjusting module 413, configured to adjust the collection resolution of the collection component 42 to the collection resolution selected by the selecting module.

The selecting module 412 selects the collection resolution that is the closest to the resolution corresponding to the screen orientation.

When selecting the collection resolution that is the closest to the resolution corresponding to the screen orientation, the selecting module 412 may perform selection according to values of a resolution. For example, the number of transverse pixels and the number of longitudinal pixels that are corresponding to the collection resolution may be compared with the number of transverse pixels and the number of longitudinal pixels that are corresponding to the resolution corresponding to the screen orientation, respectively, and a collection resolution with the number of transverse pixels closest to the number of transverse pixels that is corresponding to the resolution corresponding to the screen orientation and a collection resolution with the number of longitudinal pixels closest to the number of longitudinal pixels that is corresponding to the resolution corresponding to the screen orientation are selected. For ease of description, in this embodiment of the present invention, the number of transverse pixels that is corresponding to the resolution corresponding to the screen orientation is called a first pixel number, and the number of longitudinal pixels that is corresponding to the resolution corresponding to the screen orientation is called a second pixel number. It should be noted that, if the selected collection resolution that is the closest to the first pixel number is not the same as the selected collection resolution that is the closest to the second pixel number, the selecting module 412 may further compare a ratio between the number of transverse pixels and the number of longitudinal pixels that are corresponding to the selected collection resolutions with a ratio between the number of transverse pixels and the number of longitudinal pixels that are corresponding to the resolution corresponding to the screen orientation, and use a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation. Specifically, the selecting module 412 may include:
a selecting submodule 4121, configured to separately select, from the collection resolutions acquired by the acquiring module 411, a collection resolution with the number of transverse pixels closest to the first pixel number and a collection resolution with the number of longitudinal pixels closest to the second pixel number, where the first pixel number is the number of transverse pixels that is corresponding to the resolution corresponding to the screen orientation, and the second pixel number is the number of longitudinal pixels that is corresponding to the resolution corresponding to the screen orientation;
a comparing submodule 4122, configured to: compare a ratio between the number of transverse pixels and the number of longitudinal pixels that are corresponding to the collection resolutions selected by the selecting submodule 4121 with a ratio between the number of transverse pixels and the number of longitudinal pixels that are corresponding to the resolution corresponding to the screen orientation, and use a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

It should be noted that, if a collection resolution that is completely consistent with the resolution corresponding to the screen orientation exists in the collection resolutions, the collection resolution that is the closest to the resolution corresponding to the screen orientation and that is selected according to the foregoing manner is a collection resolution that is completely consistent with the resolution corresponding to the screen orientation. If a collection resolution that is completely consistent with the resolution corresponding to the screen orientation does not exist in the collection resolutions, the selected collection resolution that is the closest to the resolution corresponding to the screen orientation may be greater than the resolution corresponding to the screen orientation, or may be less than the resolution corresponding to the screen orientation.

In an application scenario in which a collection resolution that is completely consistent with the resolution corresponding to the screen orientation does not exist in the collection resolutions, to further improve video quality, the selecting submodule 4121 may be specifically configured to select, from collection resolutions with the number of transverse pixels greater than the first pixel number and the number of longitudinal pixels greater than the second pixel number, a collection resolution with the number of transverse pixels closest to the first pixel number and a collection resolution with the number of longitudinal pixel closest to the second pixel number.

Further, when the selected collection resolution that is the closest to the resolution corresponding to the screen orientation is greater than the resolution corresponding to the screen orientation, to ensure video quality and reduce bandwidths, in this embodiment of the present invention, after the collection component 42 collects the video image, cropping may be further performed on the collected video image to crop the collected video image to a video image whose resolution is completely consistent with the resolution corresponding to the screen orientation. The video subunit 43 in this embodiment may specifically include a cropping module 431 and an encoding module 432.

The cropping module 431 is configured to crop the video image collected by the collection component 42 to a video image whose resolution is completely consistent with the resolution corresponding to the screen orientation.

The encoding module 432 is configured to: encode the video image obtained by cropping by the cropping module 431 to form a video stream, and send the video stream to the peer terminal.

In this embodiment of the present invention, the resolution corresponding to the screen orientation may be determined according to a screen resolution of the peer terminal. Specifically, the determining unit 42 is configured to determine, according to the screen resolution of the peer terminal, the resolution corresponding to the screen orientation; when the screen orientation is a landscape orientation, the number transverse pixel that is corresponding to the resolution corresponding to the screen orientation is equal to the number of length pixels that is corresponding to the screen resolution and then number of longitudinal pixels is the number of width pixels that is corresponding to the screen resolution; and when the screen orientation is a portrait orientation, the number of transverse pixel that is corresponding to the resolution corresponding to the screen orientation is equal to the number of width pixels that is corresponding to the screen resolution and the number of longitudinal pixels is equal to the number of length pixels that is corresponding to the screen resolution.

The terminal 30 shown in FIG. 4 may acquire the screen resolution of the peer terminal in different manners. For example, the terminal 30 may pre-save screen resolutions of terminals of different type. In a process of establishing a video call, the terminal 30 may acquire a terminal type of the peer terminal according to an existing negotiation mechanism, and then acquire the screen resolution of the peer terminal according to the type of the peer terminal.

In another embodiment, the terminal 30 may also receive the screen resolution of the peer terminal from the peer terminal directly. When this manner is used, the receiving unit 41 may be further configured to receive the screen resolution of the peer terminal.

It should be noted that, the peer terminal may send the screen resolution to the terminal 30 in a negotiation process during establishing a video call, or may send the screen resolution and a screen orientation together to the terminal 30 after the screen orientation switching occurs.

To improve user experience, after the screen orientation switching of the peer terminal occurs, the terminal 30 may further perform corresponding adjustment on a video image that is provided for the peer terminal and locally displayed. Specifically, the terminal 30 may further include a switching unit 34, configured to switch an orientation of a video image to an orientation that is consistent with the screen orientation of the peer terminal, where the video image is provided for the peer terminal and locally displayed.

It should be noted that, in the prior art, during establishing a video call, the terminal 30 may perform session negotiation with the peer terminal, and during negotiation, the peer terminal determines a required resolution and directly sends the required resolution to the terminal 30; therefore, before it is detected that screen orientation switching occurs, the video call between the terminal 30 and the peer terminal may be performed according to the prior art, and the present invention only needs to resolve a problem resulting from the screen orientation switching during the video call. Therefore, the processing of establishing a video call is not involved in the foregoing embodiment. While in another embodiment, the solution provided in this embodiment of the present invention may also be applied to the process of establishing a video call.

When the solution provided in this embodiment of the present invention is used in a process of establishing a video call, the receiving unit 31 in the terminal 30 may be further configured to receive an initial screen orientation of the peer terminal in a process of establishing a video call.

Correspondingly, the video unit 33 is further configured to: before the switched screen orientation is received, provide a video stream for the peer terminal according to a video requirement corresponding to the initial screen orientation.

In the foregoing embodiment, a parameter such as a resolution is adjusted according to a screen orientation, so that a provided video stream can dynamically adapt to screen orientation switching of a peer terminal, thereby avoiding a problem that an effect is damaged, resulting from the screen orientation switching, when the peer device displays a video, and improving quality of a video call.

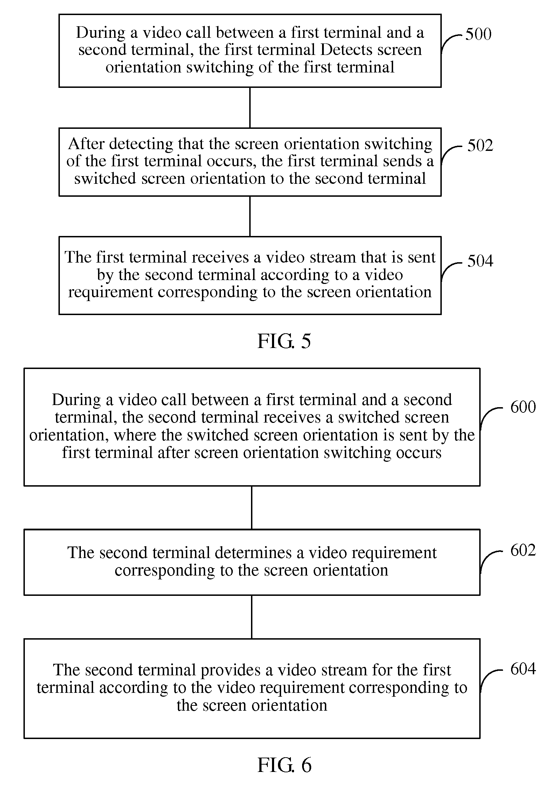

FIG. 5 is a flowchart of a method for adapting to screen orientation switching during a video call according to an embodiment of the present invention. This embodiment is described from a perspective of a terminal on which screen orientation switching occurs. As show in FIG. 5, the method includes the following steps:
S500: During a video call between a first terminal and a second terminal, the first terminal detects screen orientation switching of the first terminal.

The screen orientation switching refers to switching of a screen orientation between a landscape orientation and a portrait orientation. Landscape generally refers to that a long side of a screen is in a transverse orientation, and a short side is in a longitudinal orientation; and portrait orientation generally refers to that a short side is in a traverse orientation, and a long side is in a longitudinal orientation.

The first terminal may detect the screen orientation switching of the first terminal by using a gravity sensing component in the first terminal.

The first terminal may also detect a video image of the video call directly, and when it is detected that transposition of the video image occurs, it is determined that screen orientation switching occurs. Specifically, when longitudinal stretching of the video image occurs after the video image is transposed, it is determined that the screen orientation is switched from a landscape orientation to a portrait orientation; when transverse stretching of the video image occurs after the video image is transposed, it is determined that the screen orientation is switched from a portrait orientation to a landscape orientation.

S502: After detecting that the screen orientation switching of the first terminal occurs, the first terminal sends a switched screen orientation to the second terminal.

Specifically, the first terminal may send, to the second terminal, a negotiation request that carries the screen orientation. The negotiation request may be implemented based on the SIP protocol, for example, a re-INVITE message in the SIP protocol is extended, and the switched screen orientation is carried in an extended field.

S504: The first terminal receives a video stream that is sent by the second terminal according to a video requirement corresponding to the screen orientation.

After receiving the switched screen orientation sent by the first terminal, the second terminal determines the video requirement corresponding to the screen orientation, and provides the video stream for the first terminal according to the determined video requirement.

In the foregoing embodiment, during a video call, screen orientation switching of a terminal is detected, and a switched screen orientation is sent to a peer terminal, so that the peer terminal may provide a video stream according to a video requirement corresponding to the screen orientation, thereby avoiding a problem that an effect is damaged, resulting from the screen orientation switching, when a video is displayed, and improving quality of the video call.

To avoid that a misoperation on the first terminal causes that a screen orientation is frequently sent to the second terminal, before step S502, the method may further include determining that the detected screen orientation switching is valid screen orientation switching. The valid screen orientation switching is screen orientation switching that does not occur again within a preset time after the screen orientation switching occurs.

The foregoing preset time may be set according to an actual requirement, and the switched screen orientation may be delayed being sent to the second terminal according to the preset time.

In the foregoing embodiment, a delay mechanism is used, that is, a switched screen orientation is sent to a second terminal provided that screen orientation switching does not occur again within a preset time. In this way, it may be avoided that a screen orientation is frequently sent to the second terminal and that the second terminal adjusts a related parameter of a video image, thereby reducing network resources and reducing impact on performance of the second terminal.

In this embodiment of the present invention, a first terminal sends a screen orientation to a second terminal, so that the second terminal can adjust a related parameter that is affected by the screen orientation when a video is played, an adjusted video meets a video requirement corresponding to the screen orientation, and video quality may adapt to screen orientation switching of a terminal.

In the following, that a related parameter that is affected by a screen orientation is a resolution is used as an example to describe in detail the solution of this embodiment of the present invention. In this embodiment, the video requirement corresponding to the screen orientation specifically includes a resolution corresponding to the screen orientation.

That the first terminal sends a switched screen orientation to the second terminal in step S502 specifically includes: the first terminal sends, to the second terminal, a negotiation request that carries the screen orientation, where the negotiation request is used to request the second terminal to adjust a collection resolution of the second terminal according to the screen orientation.

For a specific implementation manner of the negotiation request, reference may be made to Table 1, and details are not provided herein again.

Step S504 specifically includes: the first terminal receives a video stream that is collected and encoded by the second terminal after the second terminal adjusts the collection resolution according to the resolution corresponding to the screen orientation.

In the foregoing embodiment, a first terminal sends a negotiation request to a second terminal, to request the second terminal to adjust a collection resolution according to a screen orientation that is carried in the negotiation request, so that a video image collected by a peer terminal can meet a requirement for a switched screen orientation both in a transverse orientation and in a longitudinal orientation, thereby avoiding performing processing such as stretching on the video image, and improving quality of a video call.

It should be noted that only adjusting the collection resolution is used as an example for description in the foregoing embodiment. When the video requirement corresponding to the screen orientation is a resolution, if a current collection resolution, both in the transverse orientation and in the longitudinal orientation, is greater than the resolution corresponding to the screen orientation, the collection resolution may also not be adjusted, but the video image is adjusted by a means, such as cropping, so that the video image meets the requirement for the switched screen orientation. Certainly, the video requirement corresponding to the screen orientation is not only a requirement for a resolution, and may also be another factor that affects image playback when the screen orientation is being switched. For specific implementation, reference may be made to similar implementation of the foregoing embodiment in which the collection resolution is adjusted, and details are not provided herein again.

In the foregoing embodiment, the resolution corresponding to the screen orientation may be determined according to a screen resolution of the first terminal. When the screen orientation is a landscape orientation, the number of transverse pixels that is corresponding to the resolution is equal to the number of length pixels that is corresponding to the screen resolution and the number of longitudinal pixels is equal to the number of width pixels that is corresponding to the screen resolution; and when the screen orientation is a portrait orientation, the number of transverse pixel that is corresponding to the resolution is equal to the number of width pixels that is corresponding to the screen resolution and the number of longitudinal pixels is equal to the number of length pixels that is corresponding to the screen resolution. In the method shown in FIG. 5, the first terminal may also provide a screen resolution for the second terminal. The first terminal may send the screen resolution to the second terminal in a negotiation process during establishing a video call, or may send the screen resolution and a screen orientation together to the second terminal after the screen orientation switching occurs. When a solution that the first terminal sends the screen resolution to the second terminal during establishing a video call is used, the second terminal saves the screen resolution received. After receiving a switched screen orientation, the second terminal acquires a pre-saved screen resolution. When a solution that the first terminal sends the screen resolution and a screen orientation together to the second terminal is used, reference for specific implementation may be made to Table 2, and details are not provided herein again.

In specific implementation, the second terminal may also not acquire the screen resolution of the first terminal from the first terminal. For example, the second terminal may pre-save a correspondence between terminals of different types and screen resolutions. In a process of establishing a video call, the second terminal may acquire a terminal type of the first terminal according to an existing negotiation mechanism, and the second terminal determines the screen resolution of the first terminal according to the terminal type of the first terminal and the correspondence between terminal types and screen resolutions that is saved by the second terminal.

It should be noted that, in the prior art, during establishing a video call, the first terminal may perform session negotiation with the second terminal, and during negotiation, the first terminal determines a required resolution and directly sends the required resolution to the second terminal; therefore, before it is detected that screen orientation switching occurs, the video call between the first terminal and the second terminal may be performed according to the prior art, and the present invention only needs to resolve a problem resulting from the screen orientation switching during the video call. Therefore, processing of establishing a video call is not involved in the embodiment shown in FIG. 5. While in another embodiment, the solution provided in this embodiment of the present invention may also be applied to the process of establishing a video call.

When the solution provided in this embodiment of the present invention is used in a process of establishing a video call, the method may further include: during establishing setting up the video call, acquiring, by the first terminal, an initial screen orientation, and sending the initial screen orientation to the second terminal; and receiving a video stream that is provided by the second terminal before the second terminal receives the switched screen orientation and according to a video requirement corresponding to the initial screen orientation.

FIG. 6 is a flowchart of a method for adapting to screen orientation switching during a video call according to another embodiment of the present invention. This embodiment is described from a perspective of a terminal that provides a video stream. As shown in FIG. 6, the method includes the following steps:
S600: During a video call between a first terminal and a second terminal, the second terminal receives a switched screen orientation that is sent by the first terminal after screen orientation switching occurs.

Specifically, the first terminal may send, to the second terminal, a negotiation request that carries the screen orientation. The negotiation request may be implemented based on the SIP protocol, for example, a re-INVITE message in the SIP protocol is extended, and the switched screen orientation is carried in an extended field.

S602: The second terminal determines a video requirement corresponding to the screen orientation.

The video requirement corresponding to the screen orientation may be a requirement for a related parameter that is affected by the screen orientation, such as a resolution.

S604: The second terminal provides a video stream for the first terminal according to the video requirement corresponding to the screen orientation.

After determining the video requirement corresponding to the screen orientation, the second terminal adjusts a related parameter according to the video requirement, to acquire a video stream that adapts to the screen orientation.

In the foregoing embodiment, a second terminal may provide a video stream according to a video requirement corresponding to a screen orientation of a first terminal, so that the provided video stream can dynamically adapt to screen orientation switching of a peer terminal, thereby avoiding a problem that an effect is damaged, resulting from the screen orientation switching, when the peer device displays a video, and improving quality of a video call.

Similarly, in the following, that a related parameter that is affected by a screen orientation is a resolution is used as an example to describe in detail the solution of this embodiment of the present invention. In this embodiment, the video requirement corresponding to the screen orientation specifically includes a resolution corresponding to the screen orientation.

Step 604 specifically includes: the second terminal adjusts a collection resolution of the second terminal according to the resolution corresponding to the screen orientation, collects a video image according to an adjusted collection resolution, encodes the collected video image to form a video stream, and sends the video stream to the first terminal.

That the second terminal adjusts a collection resolution of the second terminal according to the resolution corresponding to the screen orientation is specifically implemented as follows:
the second terminal acquires collection resolutions supported by the second terminal, selects, from the acquired collection resolutions, a collection resolution that is the closest to the resolution corresponding to the screen orientation, and adjusts the collection resolution of the second terminal to the selected collection resolution.

When selecting the collection resolution that is the closest to the resolution corresponding to the screen orientation, the second terminal may perform selection according to values of a resolution (that is the number of transverse pixels and the number of longitudinal pixels that are corresponding to the resolution corresponding to the screen orientation).

Specifically, the selecting, from the acquired collection resolutions, a collection resolution that is the closest to the resolution corresponding to the screen orientation may include the following steps:
separately selecting, from the acquired collection resolutions, a collection resolution with the number of transverse pixels closest to a first pixel number and a collection resolution with the number of longitudinal pixels closest to a second pixel number, where the first pixel number is the number of transverse pixels that is corresponding to the resolution corresponding to the screen orientation, and the second pixel number is the number of longitudinal pixels that is corresponding to the resolution corresponding to the screen orientation; and
comparing a ratio between the number of transverse pixels and the number of longitudinal pixels that are corresponding to the selected collection resolutions with a ratio between the number of transverse pixels and the number of longitudinal pixels that are corresponding to the resolution corresponding to the screen orientation, and using a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

In the foregoing process, the number of transverse pixels and the number of longitudinal pixels that are corresponding to the collection resolutions are compared with the number of transverse pixels and the number of longitudinal pixels that are corresponding to the resolution corresponding to the screen orientation, respectively; and therefore, a closest number of transverse pixels and a closest number of longitudinal pixels, obtained by comparison, may not belong to a same collection resolution. In this case, the second terminal may further compare the ratio between the number of transverse pixels and the number of longitudinal pixels that are corresponding to the selected collection resolutions with the ratio between the number of transverse pixels and the number of longitudinal pixels that are corresponding to the resolution corresponding to the screen orientation. If a closest number of transverse pixels and a closest number of longitudinal pixels, obtained by comparison, belong to a same collection resolution, a ratio between the number of transverse pixels and the number of longitudinal pixels does not need to be compared.

It should be noted that, if a collection resolution that is completely consistent with the resolution corresponding to the screen orientation exists in the collection resolutions, the collection resolution that is the closest to the resolution corresponding to the screen orientation and that is selected according to the foregoing manner is a collection resolution that is completely consistent with the resolution corresponding to the screen orientation. If a collection resolution that is completely consistent with the resolution corresponding to the screen orientation does not exist in the collection resolutions, the selected collection resolution that is the closest to the resolution corresponding to the screen orientation may be greater than the resolution corresponding to the screen orientation, or may be less than the resolution corresponding to the screen orientation.

In an application scenario in which there is a collection resolution that is completely consistent with the resolution corresponding to the screen orientation does not exist in the collection resolution, to further improve video quality, the separately selecting, from the acquired collection resolutions, a collection resolution with the number of transverse pixels closest to a first pixel number and a collection resolution with the number of longitudinal pixels closest to a second pixel nuber may specifically include:
selecting, from collection resolutions with the number of transverse pixels greater than the first pixel number and the number longitudinal pixels greater than the second pixel number, a collection resolution with the number of transverse pixels closest to the first pixel number and a collection resolution with the number of longitudinal pixels closest to the second pixel number.

Further, when the selected collection resolution that is the closest to the resolution corresponding to the screen orientation is greater than the resolution corresponding to the screen orientation, to ensure video quality and reduce bandwidths, the encoding the collected video image to form a video stream, and sending the video stream to the first terminal may specifically include:
cropping the collected video image to a video image whose resolution is completely matched with the resolution corresponding to the screen orientation; and
encoding the video image obtained by cropping to form a video stream, and sending the video stream to the first terminal.

In this embodiment of the present invention, the second terminal may determine the resolution corresponding to the screen orientation with reference to a screen resolution. Therefore, the method described in FIG. 6 may further include: receiving, by the second terminal, a screen resolution of the first terminal.

Correspondingly, step 602 specifically includes: the second terminal determines, according to the screen resolution, the resolution corresponding to the screen orientation; when the screen orientation is a landscape orientation, the number of transverse pixels that is corresponding to the resolution is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution is the number of width pixels that is corresponding to the screen resolution and the number of longitudinal pixels is the number of length pixels that is corresponding to the screen resolution.

It should be noted that, the first terminal may send the screen resolution to the second terminal in a negotiation process during establishing a video call, or may send the screen resolution and a screen orientation together to the second terminal after the screen orientation switching occurs. When a solution that the first terminal sends the screen resolution to the second terminal during establishing a video call is used, the second terminal saves a received screen resolution. After receiving a switched screen orientation, the second terminal acquires a pre-saved screen resolution. When a solution that the first terminal sends the screen resolution and a screen orientation together to the second terminal is used, reference for specific implementation may be made to Table 2, and details are not provided herein again.

In specific implementation, the second terminal may also not acquire the screen resolution of the first terminal from the first terminal. For example, the second terminal may pre-save a correspondence between terminals of different types and screen resolutions. In a process of establishing a video call, the second terminal may acquire a terminal type of the first terminal according to an existing negotiation mechanism, and the second terminal determines the screen resolution of the first terminal according to the terminal type of the first terminal and the correspondence between terminal types and screen resolutions that is saved by the second terminal.

To improve user experience, after the screen orientation switching of the first terminal occurs, the second terminal may further switch an orientation of a video image to an orientation that is consistent with the screen orientation of the peer terminal, where the video image is provided for the peer terminal and locally displayed.

It should be noted that, in the prior art, during establishing a video call, the first terminal may perform session negotiation with the second terminal, and during negotiation, the first terminal determines a required resolution and directly sends the required resolution to the second terminal; therefore, before it is detected that screen orientation switching occurs, the video call between the first terminal and the second terminal may be performed according to the prior art, and the present invention only needs to resolve a problem resulting from the screen orientation switching during the video call. Therefore, the processing of establishing a video call is not involved in the embodiment shown in FIG. 6. While in another embodiment, the solution provided in this embodiment of the present invention may also be applied to the process of establishing a video call.

When the solution provided in this embodiment of the present invention is used in a process of establishing a video call, the method may further include: in a process of establishing the video call, receiving, by the second terminal, an initial screen orientation of the first terminal; before receiving the switched screen orientation, providing, by the second terminal, a video stream for the first terminal according to a video requirement corresponding to the initial screen orientation.

In the foregoing embodiment, a parameter such as a resolution is adjusted according to a screen orientation, so that a provided video stream can dynamically adapt to screen orientation switching of a peer terminal, thereby avoiding a problem that an effect is damaged, resulting from the screen orientation switching, when the peer terminal displays a video, and improving quality of a video call.

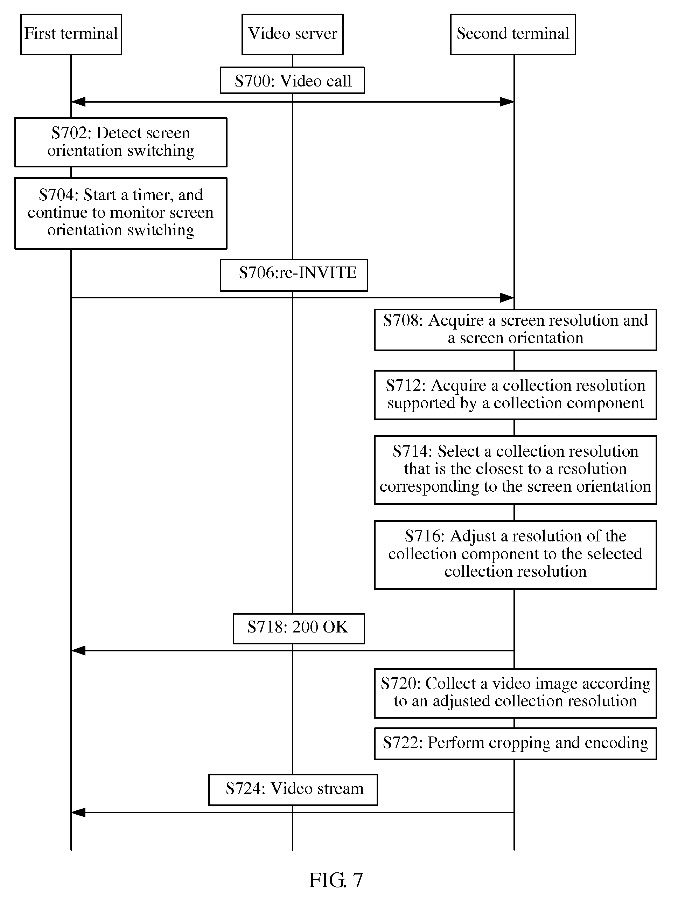

In the following, a video call service based on the SIP protocol is used as an example to describe in more detail the solution provided in this embodiment of the present invention. FIG. 7 is a flowchart of a method for adapting to screen orientation switching during a video call according to another embodiment of the present invention. As shown in FIG. 7, the method includes the following steps:
S700: A first terminal establishes a video call with a second terminal by using a video server.

An existing procedure for establishing a video call in the SIP protocol may be used to implement step S700, and details are not provided herein again.

S702: The first terminal detects screen orientation switching of the first terminal in real time.

The first terminal may detect the screen orientation switching by using a gravity sensing component.

S704: The first terminal starts a timer when detecting that the screen orientation switching occurs, and continues to detect whether screen orientation switching occurs.

A purpose of starting the timer is to determine whether screen orientation switching occurs again within a preset time, so as to determine whether the detected screen orientation switching is valid screen orientation switching.

S706: Send, to the second terminal by using the video server, a negotiation message re-INVITE that carries a screen resolution and a screen orientation.

It should be noted that, that a video requirement corresponding to the screen orientation is a resolution is used as an example for description in this embodiment.

When the preset time of the timer expires, if screen orientation switching does not occur again, step S706 is performed. When the preset time of the timer does not expire, if screen orientation switching occurs again, step S704 continues to be performed.

A sample of the re-INVITE message is as follows:
m=video 10520 RTP/AVP 106
a=rtpmap:106 H264/90000
a=fmtp:106,x-dimensions-length=600;
x- dimensions- width =480;
a=fmtp:106 x-orientation=1
where x-dimensions-length and x- dimensions- width respectively identify a length and a width of a screen of the first terminal, and a unit is the number of pixels; and
x-orientation identifies a screen orientation of a terminal after screen orientation switching occurs, for example, if a screen orientation of the first terminal is switched from a portrait orientation to a landscape orientation in the current example, x-orientation=1 identifies that a current screen orientation is a landscape orientation.

S708: The second terminal acquires, from the re-INVITE message, a screen resolution and a screen orientation that are of the first terminal.

After receiving the re-INVITE message, the second terminal parses an extended field of the re-INVITE message, to acquire the screen resolution and the screen orientation that are of the first terminal.

S710: The second terminal determines, according to the acquired screen resolution and screen orientation, a resolution corresponding to the screen orientation.

For example, according to the foregoing example, the second terminal determines that the resolution corresponding to the screen orientation with the number of transverse pixels X being 600 and the number of longitudinal pixels Y being 480, that is, 600 x 480.

S712: The second terminal acquires collection resolutions supported by the second terminal.

The collection resolutions supported by the second terminal are collection resolutions supported by a collection component in the second terminal. The collection component may be a camera. The second terminal may invoke a bottom-driven interface of the collection component to acquire a list of the collection resolutions supported by the collection component. In this embodiment, it is assumed that the resolutions supported by the collection component are 1280 x 720, 720 x 480, 640 x 400, 352 x 288, and 320 x 240.

S714: The second terminal selects, from the supported collection resolutions, a collection resolution that is the closest to the resolution corresponding to the screen orientation.
(a) The second terminal preferentially selects a collection resolution with the number of transverse pixels closest to the number of transverse pixels that is corresponding to the resolution corresponding to the screen orientation and a collection resolution with the number of longitudinal pixels closest to the number of longitudinal pixels that is corresponding to the resolution corresponding to the screen orientation. For example, if the resolution corresponding to the screen orientation is 600 x 480, selected collection resolutions are 720 x 480 and 640 x 400.
(b) On the premise of meeting (a), a resolution with a transverse-to-longitudinal ratio closest to a transverse-to-longitudinal ratio of the resolution corresponding to the screen orientation is selected. The transverse-to-longitudinal ratio herein refers to a ratio between the number of transverse pixels and the number of longitudinal pixels.

Comparison may be performed by using the following formula: Z=|X/Y-A/B|, where X and Y are the number of transverse pixels and the number of longitudinal pixels that are corresponding to the resolution corresponding to a screen orientation, respectively; A and B are the number of transverse pixels and the number of longitudinal pixels that are corresponding to a selected collection resolution, respectively; and Z is a difference between transverse-to-longitudinal ratios of the resolution corresponding to the screen orientation and the selected collection resolutions, that is, an absolute value of X/Y-A/B. A collection resolution for a to-be-photographed video with a smallest value of Z is a collection resolution that is the closest to the resolution corresponding to the screen orientation. In this embodiment, a collection resolution 720 x 480 is finally selected.

S716: The second terminal adjusts a resolution of the second terminal to the selected collection resolution.

S718: The second terminal returns a successful response to the first terminal.

The successful response may be a message 200 OK.

S720: The second terminal collects a video image according to an adjusted collection resolution.

S722: The second terminal crops the collected video image according to the resolution corresponding to the screen orientation, and encodes the video image obtained by cropping to form a video stream.

In this embodiment, the second terminal crops a collected video image whose resolution is 720 x 480 to a video image whose resolution is 600 x 480.

S724: The second terminal sends the video stream obtained by encoding to the first terminal.

In the foregoing embodiment, a first terminal performs dynamic negotiation of screen orientation switching with a second terminal, thereby avoiding a problem that an effect is damaged, resulting from screen orientation switching, when the first terminal displays a video, and improving quality of a video call.

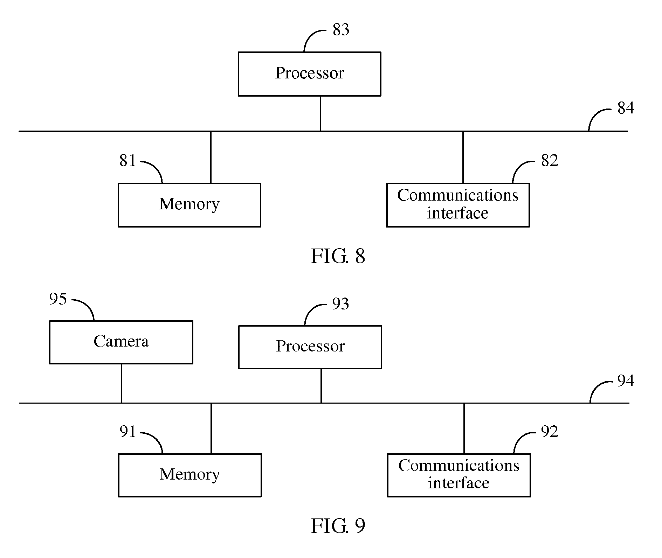

FIG. 8 is a structural diagram of hardware of a terminal according to an embodiment of the present invention. The terminal in this embodiment is a terminal on which screen orientation switching occurs. As shown in FIG. 8, the terminal includes a memory 81, a communications interface 82, a processor 83, and a bus 84.

The processor 83, the memory 81, and the communications interface 82 are communicatively connected by using the bus 84.

The communications interface 82 is configured to implement communication between the terminal and another device or a communications network (for example, but not limited to, a PLMN/PSTN and the Internet).

The memory 81 may be a read-only memory (Read Only Memory, ROM), a static storage device, a dynamic storage device, or a random access memory (Random Access Memory, RAM). The memory 81 may store an operating system, and an instruction and application data of another application program. The instruction stored in the memory 81 is run and executed by the processor 83.

The processor 83 may be a general-purpose central processing unit (Central Processing Unit, CPU), a microprocessor, an application-specific integrated circuit (Application Specific Integrated Circuit, ASIC), or one or more integrated circuits, and is configured to execute a related program.

The bus 84 may include a path for transferring information between components (such as the processor 83, the memory 81, and the communications interface 82).

In this embodiment of the present invention, the processor 83 is configured to execute the instruction in the memory 81, so as to implement the following functions: During a video call, detecting screen orientation switching of a first terminal; after it is detected that the screen orientation switching occurs, sending a switched screen orientation to a second terminal by using the communications interface 82; and receiving, by using the communications interface 82, a video stream that is sent by the second terminal according to a video requirement corresponding to the screen orientation.

Before sending the switched screen orientation, the processor 83 further determines that the detected screen orientation switching is valid screen orientation switching. The valid screen orientation switching is screen orientation switching that does not occur again within a preset time after the screen orientation switching occurs.

For a specific processing process of the processor shown in FIG. 8, reference may be made to the part of the method embodiment shown in FIG. 5, and details are not provided herein again.

FIG. 9 is a structural diagram of hardware of a terminal according to an embodiment of the present invention. The terminal in this embodiment is a terminal that provides a video stream. As shown in FIG. 9, the terminal includes a memory 91, a communications interface 92, a processor 93, a bus 94, and a camera 95.

The processor 93, the memory 91, the camera 95, and the communications interface 92 are communicatively connected by using the bus 94.

The communications interface 92 is configured to implement communication between the terminal and another device or a communications network (for example, but not limited to, a PLMN/PSTN and the Internet).

The memory 91 may be a read-only memory (Read Only Memory, ROM), a static storage device, a dynamic storage device, or a random access memory (Random Access Memory, RAM). The memory 91 may store an operating system, and an instruction and application data of another application program. The instruction stored in the memory 91 is run and executed by the processor 93.

The processor 93 may use a general-purpose central processing unit (Central Processing Unit, CPU), a microprocessor, an application-specific integrated circuit (Application Specific Integrated Circuit, ASIC), or one or more integrated circuits, and is configured to execute a related program.

The bus 94 may include a path for transferring information between components (such as the processor 93, the memory 91, the communications interface 92, and the camera 95).

The camera 95 is a collection component and is configured to collect a video image.

In this embodiment of the present invention, the processor 93 is configured to execute the instruction in the memory 91, so as to implement the following functions: in a process of a video call, receiving a switched screen orientation that is sent by a first terminal after screen orientation switching occurs; determining a video requirement corresponding to the screen orientation; and providing a video stream for the first terminal according to the video requirement corresponding to the screen orientation.

Specifically, for a specific processing process of the processor shown in FIG. 9, reference may be made to the part of the method embodiment shown in FIG. 6, and details are not provided herein again.

In the foregoing embodiment, a parameter such as a resolution is adjusted according to a screen orientation, so that a provided video stream can dynamically adapt to screen orientation switching of a peer terminal, thereby avoiding a problem that an effect is damaged, resulting from the screen orientation switching, when the peer terminal displays a video, and improving quality of a video call.

Through the descriptions of the foregoing embodiments, a person of ordinary skill in the art should understand that, all or a part of the steps of the method according to the foregoing embodiments may be implemented by a program instructing related hardware. The program may be stored in a computer readable storage medium. When the program is run, the steps of the method according to the foregoing embodiments are performed. The storage medium may be a ROM/RAM, a magnetic disk, an optical disk, and the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A terminal, comprising:
a detecting unit, configured to: detect screen orientation switching of the terminal in a process of a video call, and after it is detected that the screen orientation switching occurs, provide a detected result that the screen orientation switching occurs for a negotiating unit;
the negotiating unit, configured to: after receiving the detected result provided by the detecting unit, send a switched screen orientation to a peer terminal on the video call; and
a video unit, configured to receive a video stream that is sent by the peer terminal according to a video requirement corresponding to the screen orientation.

2. The terminal according to claim 1, wherein before providing the detected result for the negotiating unit, the detecting unit is further configured to determine that the detected screen orientation switching is valid screen orientation switching, wherein the valid screen orientation switching is screen orientation switching that does not occur again within a preset time after the screen orientation switching occurs.

3. The terminal according to claim 1 or 2, wherein the video requirement corresponding to the screen orientation specifically comprises a resolution corresponding to the screen orientation, wherein
the negotiating unit is specifically configured to send, to the peer terminal, a negotiation request that carries the screen orientation, wherein the negotiation request is used to request the peer terminal to adjust a collection resolution of the peer terminal according to the screen orientation; and
the video unit is specifically configured to receive a video stream that is collected and encoded by the peer terminal after the peer terminal adjusts the collection resolution according to the resolution corresponding to the screen orientation.

4. The terminal according to claim 3, wherein the negotiating unit is further configured to send a screen resolution to the peer terminal, wherein the screen resolution is used to determine the resolution corresponding to the screen orientation; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution is equal to the number of width pixelsthat is corresponding to the screen resolution and the number of longitudinal pixels is equal to the number of length pixels that is corresponding to the screen resolution.

5. The terminal according to any one of claims 1 to 4, wherein the negotiating unit is further configured to: during establishing the video call, acquire an initial screen orientation, and send the initial screen orientation to the peer terminal; and
the video unit is further configured to receive a video stream that is provided by the peer terminal before the peer terminal receives the switched screen orientation and according to a video requirement corresponding to the initial screen orientation.

6. A terminal, comprising:
a receiving unit, configured to receive, during a video call, a switched screen orientation that is sent by a peer terminal on the video call after screen orientation switching occurs;
a determining unit, configured to determine a video requirement corresponding to the screen orientation received by the receiving unit; and
a video unit, configured to provide a video stream for the peer terminal according to the video requirement corresponding to the screen orientation that is determined by the determining unit.

7. The terminal according to claim 6, wherein the video requirement corresponding to the screen orientation specifically comprises a resolution corresponding to the screen orientation, and
the video unit specifically comprises an adjusting subunit, a collection component, and a video subunit, wherein
the adjusting subunit is configured to adjust a collection resolution of the collection component according to the resolution corresponding to the screen orientation;
the collection component is configured to collect a video image according to a collection resolution that is obtained after the adjusting subunit performs the adjustment; and
the video subunit is configured to: encode the video image collected by the collection component to form a video stream, and send the video stream to the peer terminal.

8. The terminal according to claim 7, wherein the adjusting subunit specifically comprises:
an acquiring module, configured to acquire collection resolutions supported by the collection component;
a selecting module, configured to select, from the collection resolutions acquired by the acquiring module, a collection resolution that is the closest to the resolution corresponding to the screen orientation,; and
an adjusting module, configured to adjust the collection resolution of the collection component to the collection resolution selected by the selecting module.

9. The terminal according to claim 8, wherein the selecting module specifically comprises:
a selecting submodule, configured to separately select, from the collection resolutions acquired by the acquiring module, a collection resolution with the number of transverse pixels closest to a first pixel number and a collection resolution with the number of longitudinal pixels closest to a second pixel number, wherein the first pixel number is a quantity the number of transverse pixels that is corresponding to the resolution corresponding to the screen orientation, and the second pixel number is the number of longitudinal pixels that is corresponding to the resolution corresponding to the screen orientation; and
a comparing submodule, configured to: compare a ratio between the number of transverse pixels and the number of longitudinal pixels that are corresponding to the collection resolutions selected by the selecting submodule with a ratio between the number of transverse pixels and the number of longitudinal pixels that are corresponding to the resolution corresponding to the screen orientation, and use a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

10. The terminal according to claim 9, wherein the selecting submodule is specifically configured to select, from collection resolutions with the number of transverse pixels greater than the first pixel number and the number of longitudinal pixels greater than the second pixel number, a collection resolution with the number of transverse pixels closest to the first pixel number and a collection resolution with the number of longitudinal pixels closest to the second pixel number.

11. The terminal according to claim 10, wherein the video subunit specifically comprises:
a cropping module, configured to crop the video image collected by the collection component to a video image whose resolution is completely consistent with the resolution corresponding to the screen orientation,; and
an encoding module, configured to: encode the video image obtained by cropping by the cropping module to form a video stream, and send the video stream to the peer terminal.

12. The terminal according to any one of claims 6 to 11, wherein the terminal further comprises:
a switching unit, configured to switch an orientation of a video image to an orientation that is consistent with the screen orientation of the peer terminal, wherein the video image is provided for the peer terminal and locally displayed.

13. The terminal according to any one of claims 7 to 12, wherein the receiving unit is further configured to receive a screen resolution of the peer terminal; and
the determining unit is specifically configured to determine, according to the screen resolution, the resolution corresponding to the screen orientation; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

14. The terminal according to any one of claims 6 to 13, wherein the receiving unit is further configured to receive an initial screen orientation of the peer terminal during establishing the video call; and
the video unit is further configured to: before the switched screen orientation is received, provide a video stream for the peer terminal according to a video requirement corresponding to the initial screen orientation.

15. A method for adapting to screen orientation switching during a video call, wherein the method comprises:
during a video call between a first terminal and a second terminal, detecting, by the first terminal, screen orientation switching of the first terminal;
after it is detected that the screen orientation switching of the first terminal occurs, sending, by the first terminal, a switched screen orientation to the second terminal; and
receiving, by the first terminal, a video stream that is sent by the second terminal according to a video requirement corresponding to the screen orientation.

16. The method according to claim 15, wherein before the switched screen orientation is sent to the second terminal, the method further comprises determining that the detected screen orientation switching is valid screen orientation switching, wherein the valid screen orientation switching is screen orientation switching that does not occur again within a preset time after the screen orientation switching occurs.

17. The method according to claim 15 or 16, wherein the video requirement corresponding to the screen orientation specifically comprises a resolution corresponding to the screen orientation, wherein
the sending a switched screen orientation to the second terminal specifically comprises sending, to the second terminal, a negotiation request that carries the screen orientation, wherein the negotiation request is used to request the second terminal to adjust a collection resolution of the second terminal according to the screen orientation,; and
the receiving a video stream that is sent by the second terminal according to a video requirement corresponding to the screen orientation specifically comprises receiving a video stream that is collected and encoded by the second terminal after the second terminal adjusts the collection resolution according to the resolution corresponding to the screen orientation.

18. The method according to claim 17, wherein the method further comprises:
sending, by the first terminal, a screen resolution of the first terminal to the second terminal, wherein the screen resolution is used to determine the resolution corresponding to the screen orientation,; when the screen orientation is a landscape orientation, the number of transverse pixels that is corresponding to the resolution corresponding to the screen orientation is equal to the number of length pixels that is corresponding to the screen resolution and the number of longitudinal pixels is equal to the number of width pixels that is corresponding to the screen resolution; and when the screen orientation is a portrait orientation, the number of transverse pixels that is corresponding to the resolution corresponding to the screen orientation is equal to the number of width pixels that is corresponding to the screen resolution and the number of longitudinal pixels is equal to the number of length pixels that is corresponding to the screen resolution.

19. The method according to any one of claims 15 to 18, wherein the method further comprises:
during establishing the video call, acquiring, by the first terminal, an initial screen orientation, and sending the initial screen orientation to the second terminal; and
receiving, by the first terminal, a video stream that is provided by the second terminal before the second terminal receives the switched screen orientation and according to a video requirement corresponding to the initial screen orientation.

20. A method for adapting to screen orientation switching during a video call, wherein the method comprises:
During a video call between a first terminal and a second terminal, receiving, by the second terminal, a switched screen orientation that is sent by the first terminal after screen orientation switching occurs;
determining, by the second terminal, a video requirement corresponding to the screen orientation,; and
providing, by the second terminal, a video stream for the first terminal according to the video requirement corresponding to the screen orientation.

21. The method according to claim 20, wherein the video requirement corresponding to the screen orientation specifically comprises a resolution corresponding to the screen orientation,; and
the providing, by the second terminal, a video stream for the first terminal according to the video requirement corresponding to the screen orientation specifically comprises:
adjusting, by the second terminal, a collection resolution of the second terminal according to the resolution corresponding to the screen orientation,; and
collecting a video image according to an adjusted collection resolution, encoding the collected video image to form a video stream, and sending the video stream to the first terminal.

22. The method according to claim 21, wherein the adjusting, by the second terminal, a collection resolution of the second terminal according to the resolution corresponding to the screen orientation specifically comprises:
acquiring, by the second terminal, collection resolutions supported by the second terminal;
selecting, from the acquired collection resolutions, a collection resolution that is the closest to the resolution corresponding to the screen orientation,; and
adjusting the collection resolution of the second terminal to the selected collection resolution.

23. The method according to claim 22, wherein the selecting, from the acquired collection resolutions, a collection resolution that is the closest to the resolution corresponding to the screen orientation specifically comprises:
separately selecting, from the acquired collection resolutions, a collection resolution with the number of transverse pixels closest to a first pixel number and a collection resolution with a quantity of longitudinal pixels closest to a second quantity of pixels, wherein the first quantity of pixels is the number of transverse pixels that is corresponding to the resolution corresponding to the screen orientation, and the second pixel number is the number of longitudinal pixels that is corresponding to the resolution corresponding to the screen orientation; and
comparing a ratio between the number of transverse pixels and the number of longitudinal pixels that are corresponding to the selected collection resolutions with a ratio between the number of transverse pixels and the number of longitudinal pixels that are corresponding to the resolution corresponding to the screen orientation, and using a collection resolution with the number of transverse pixels and the number of longitudinal pixels between which a ratio is the closest to the ratio between the number of transverse pixels and the number of longitudinal pixels that are corresponding to the resolution corresponding to the screen orientation, as the collection resolution that is the closest to the resolution corresponding to the screen orientation.

24. The method according to claim 23, wherein the separately selecting, from the acquired collection resolutions, a collection resolution with the number of transverse pixels closest to a first pixel number and a collection resolution with the number of longitudinal pixels closest to a second pixel number specifically comprises:
selecting, from collection resolutions with the number of transverse pixels greater than the first pixel number and the number of longitudinal pixels greater than the second pixel number, a collection resolution with the number of transverse pixels closest to the first pixel number and a collection resolution with the number of longitudinal pixels closest to the second pixel number.

25. The method according to claim 24, wherein the encoding the collected video image to form a video stream, and sending the video stream to the first terminal specifically comprises:
cropping the collected video image to a video image whose resolution is completely matched with the resolution corresponding to the screen orientation; and
encoding the video image obtained by cropping to form a video stream, and sending the video stream to the first terminal.

26. The method according to any one of claims 20 to 25, wherein the method further comprises:
switching, by the second terminal, an orientation of a video image to an orientation that is consistent with the screen orientation of the peer terminal, wherein the video image is provided for the peer terminal and locally displayed.

27. The method according to any one of claims 21 to 26, wherein the method further comprises receiving, by the second terminal, a screen resolution of the first terminal, and
the determining, by the second terminal, a video requirement corresponding to the screen orientation specifically comprises: determining, by the second terminal according to the screen resolution, the resolution corresponding to the screen orientation; when the screen orientation is a landscape orientation, the number of transverse pixel that is corresponding to the resolution corresponding to the screen orientation is equal to the number of length pixels that is corresponding to the screen resolution and the number of longitudinal pixels is equal tothe number of width pixels that is corresponding to the screen resolution; and when the screen orientation is a portrait orientation, a transverse pixel that is corresponding to a corresponding resolution is equal tothe number of width pixels that is corresponding to the screen resolution and the number of longitudinal pixels is equal to the number of length pixels that is corresponding to the screen resolution.

28. The method according to claims 20 to 27, wherein the method further comprises:
During establishing the video call, receiving, by the second terminal, an initial screen orientation of the first terminal; and
before receiving the switched screen orientation, providing, by the second terminal, a video stream for the first terminal according to a video requirement corresponding to the initial screen orientation.
